# EUROPÄISCHE PATENTSCHRIFT

(11) **EP 0 592 779 B1**
(45) Veröffentlichungstag und Bekanntmachung des Hinweises auf die Patenterteilung: **02.09.1998**
(21) Anmeldenummer: 93112020.8
(22) Anmeldetag: 28.07.1993
(51) Int. Cl.: C07F 7/22

(54) **Verfahren zur Herstellung von Distannanen**
Process for the preparation of distannanes
Procédé pour la préparation de distannanes

(30) Priorität: 17.09.1992 DE 4231083
(43) Veröffentlichungstag der Anmeldung: 20.04.1994
(73) Patentinhaber: Witco GmbH, 59180 Bergkamen (DE)
(72) Erfinder: Stewen, Ulrich, Dr. Dipl.-Chem., D-58239 Schwerte (DE)

(56) Entgegenhaltungen:
- CHEMICAL ABSTRACTS, vol. 104, 1986, Columbus, Ohio, US; abstract no. 224977c,
- CHEMISTRY AND INDUSTRY 5. Dezember 1988, Seite 764 J. SZAMMER ET AL

## Beschreibung

Die vorliegende Erfindung betrifft ein verbessertes Verfahren zur Herstellung von Hexaalkyldistannanen, die, bedingt durch die einfache Prozeßführung, in nahezu quantitativer Ausbeute isoliert werden.

Hexaalkyldistannane, insbesondere Hexabutyldistannan, sind wertvolle und außerordentlich vielseitige Reagenzien für die organische Synthese. Sie erlangen als Katalysatoren zunehmendes Interesse in einer Anzahl technischer Prozesse.

Detaillierte Informationen sind einigen Übersichtsarbeiten zu entnehmen, wie z. B. W. P. Neumann: Die Organische Chemie des Zinns, Ferdinand Enke Verlag, Stuttgart 1967; R. C. Poller: The Chemistry of Organotin Compounds, Logos Press Limited, 1970; M. Pereyre, J. P. Quintard and A. Rahm: Tin in Organic Synthesis, Butterworth, London 1987; I. Omar, Organotin Chemistry, Elsevier, Amsterdam 1989; P. G. Harrison, Chemistry of Tin, Blackie, Glasgow.

Verfahren zur Herstellung von Distannanen sind beschrieben. Diese erfordern aufwendige Verfahren, liefern die Distannane in schlechten Ausbeuten oder benötigen teure Einsatzstoffe, wie z. B. Trialkylzinnhydride.

Die Herstellung von Verbindungen mit Sn-Sn-Bindungen ist z. B. in folgenden Arbeiten zusammengefaßt:
- Houben Weyl, Methoden der Organischen Chemie Band 13/6, 401 - 416
- A.G. Davies, P. J. Smith, Comprehensive Organometallic Chemistry, Pergamon Press, 591.
- A. K. Sawyer: Organotin Compounds Vol. 3, Marcel Dekker, Inc., New York 1972, 823 - 879.
- W. P. Neumann: Die Organische Chemie des Zinns, Ferdinand Enke Verlag, Stuttgart 1967, 102 - 121.

Die Kondensation von Trialkylzinnhydriden mit Trialkylzinnaminen, -alkoxyden oder mit Bis-[trialkylzinn]oxiden ergibt Hexaalkyldistannane in guten Ausbeuten. Diese Reaktion erfordert den Einsatz teurer Einsatzstoffe, die außerdem aufgrund ihrer hohen Reaktivität aufwendig in der Handhabung sind. (W. P. Neumann, B. Schneider, Angew. Chem., Int. Ed. Engl. 3, 751, (1964)); W. P. Neumann, J. Pedain, Tetrahedron Lett., Int. 1964, 2461).

Hexaalkyldistannane können in hoher Ausbeute aus Trialkylzinnhydriden durch katalytische Wasserstoffabspaltung hergestellt werden. (W. P. Neumann, Angew. Chem. 73, 541 (1961)).

CA 98:89536 y und CA 101: 111072 y beschreiben die Synthese von Distannanen aus den Hydriden in Gegenwart eines Pd-Komplexes in Ausbeuten von 71 - 89 %. Die Trialkylzinnhydride werden in situ durch Reduktion der Trialkylzinn- oder Triarylzinnchloride mit LiAlH₄ erzeugt.

Die Umsetzung von Bis[trialkylzinn]oxid mit Ameisensäure ergibt Hexaalkyldistannane verunreinigt mit Polyzinnverbindungen (B. Jousseaume et al, J. Organomet. Chem., 294 (3), C41-45)

Durch Thermolyse können Hexaalkyldistannane, stark verunreinigt mit weiteren Zersetzungsprodukten, aus Trialkylzinnformiaten gewonnen werden (DE-A-19 55 241).

In CA 95:123026g(JP-A-56.058.981) wird die Gewinnung von Distannanen durch aufwendige Elektrolyse von Trialkyl- und Triarylzinnformiaten beschrieben.

Die Umsetzung von Trialkylzinn-Lithium oder -Natrium mit Trialkylzinnhalogeniden zu Distannanen ist in G. Wittig et al, Liebigs Ann. Chem. 571, 167 (1951) publiziert.

In US-A-3 699 138 wird die Herstellung von Distannanen aus Trialkylzinnhalogeniden mit geschmolzenem Natrium beschrieben.

Die Reduktion von Bis-[trialkylzinn]oxid durch Ti, K, Na oder Mg liefert in 60 - 82 %iger Ausbeute die Hexaalkyldistannane (B. Jousseaume, E. Chanson, M. Pereyre, Organometallics, 5 (6), 1271-2).

Die Umsetzung von Tributylzinnchlorid mit Magnesium in THF führt in 70 %iger Ausbeute zum Hexabutyldistannan (CA72:90 593j).

Hexaalkyldistannane können durch Wurtzreaktion ausgehend von Trialkylzinnhalogeniden und Na-Metall in flüssigem Ammoniak oder Ether hergestellt werden. (R. K. Ingham, S. D. Rosenberg und H. Gilmann, Chem. Rev. 60, 459 (1960); G. Grüttner, Chem. Ber. 1917, 50, 1808).

Die Umsetzung von Natrium in Tetrabutylzinn mit Tributylzinnchlorid liefert nach aufwendiger Aufarbeitung Hexabutyldistannan in 93 %iger Ausbeute (BE-A-672867).

Aufgabe der vorliegenden Erfindung war es, die Nachteile der bisher bekannten Verfahren zu überwinden und ein Verfahren bereit zu stellen, welches eine einfache und sichere Reaktionsführung ermöglicht und dessen Einsatzstoffe preiswert und unproblematisch in der Handhabung sind.

Überraschend wurde nun gefunden, daß man Hexaalkyldistannane der allgemeinen Formel

R₁R₂R₃Sn-SnR₁R₂R₃

worin R₁, R₂, R₃ verzweigte und/oder unverzweigte und/oder substituierte Alkylgruppen sind, die gleich oder unterschiedlich sein können, herstellen kann, indem man erfindungsgemäß Bis-[trialkylzinn]oxid mit einer durch Zusatz einer Base stabilisierten alkoholischen, vorzugsweise methanolischen, NaBH₄-Lösung in Gegenwart eines inerten Lösungsmittels umsetzt.

Dabei ist das Einhalten einer Nachreaktionszeit von 0,5 bis 3 h vorteilhaft.

Die Reaktionstemperaturen sollten zwischen 0 und 200 °C, vorzugsweise 50 - 80 °C, liegen.

Vorteilhaft wird bei dem erfindungsgemäßen Verfahren ein inertes Lösungsmittel gewählt, das weder mit Hexaalkyldistannanen noch mit intermediär erzeugten Organozinnhydriden noch mit NaBH₄ reagiert. Als Lösungsmittel kommen dabei infrage Diethylether, Dioxan, Acetonnitril, Kohlenwasserstoffe, vorzugsweise Tetrahydrofuran. Die Ausgangsverbindungen werden bevorzugt in stöchiometrischem oder annähernd stöchiometrischem Verhältnis eingesetzt im Bereich von 0,5 bis 1,5 mol NaBH₄ zu 1 mol Bis-[trialkylzinn]oxid.

Mit Vorteil wird zur sicheren Handhabung eine stabilisierte alkoholische NaBH₄-Lösung eingesetzt, wozu sich insbesondere Basen wie Natriumhydroxid eignen.

Vorzugsweise werden bei der Reduktion zur Beschleunigung 0,1 - 10 Gew.-% Wasserstoff-acide Verbindungen wie Thiosalicylsäure, Milchsäure, Laurylmercaptan, vorzugsweise Thioglycolsäure, eingesetzt.

Die Reaktion von Bis-[trialkylzinn]oxiden mit alkoholischer, stabilisierter NaBH₄-Lösung zu Hexaalkyldistannanen läßt sich durch kontrolliertes Zudosieren des Reduktionsmittels einfach steuern. Die umgekehrte Reaktionsführung, das heißt Vorlegen der NaBH₄-Lösung, ist ohne Ausbeuteverlust möglich.

Die Reaktion kann durch Wasserstoff-acide Verbindungen z. B. Thiosalicylsäure, Milchsäure oder vorzugsweise Thioglycolsäure beschleunigt werden.

Während der Zudosierung der Komponenten bildet sich vermutlich aus der Reaktion von NaBH₄ mit Bis-[trialkylzinn]oxid intermediär Trialkylzinnhydrid, welches direkt zum Hexaalkyldistannan weiterreagiert.

Nach Abdestillieren der Lösungsmittel und Filtration werden die Hexaalkyldistannane in hoher Reinheit isoliert.

Der besondere Vorteil des Verfahrens liegt in der einfachen Reaktionsführung, die es gestattet, in einem Eintopfverfahren, ausgehend von preiswerten und einfach zu handhabenden Einsatzstoffen, die gewünschten Hexaalkyldistananne in nahezu quantitativer Ausbeute herzustellen.

### Beispiele

### Beispiel 1

Zu einer Lösung aus 119,2 g (0,2 mol) Bis-[tributylzinn]oxid in 100 ml THF werden bei Rückflußtemperatur innerhalb von 1 h 8,5 g (0,22 mol) NaBH₄, gelöst in 200 ml Methanol und stabilisiert mit 8,0 g (0,2 mol) Natriumhydroxid, zudosiert.

Nach 1 h Nachreaktion bei Rückflußtemperatur wird abgekühlt und die THF-Phase abgetrennt. Die methanolische Phase kann zur Erhöhung der Gesamtausbeute mit THF extraktiert werden. Das Lösungsmittel der vereinigten organischen Phase wird abdestilliert. Nach Filtration werden 111 g (96 %) Hexabutyldistannan mit einer Reinheit von >96 % gemäß gaschromatographischer Analyse isoliert. Das Produkt enthält weder Tributylzinnhydrid noch Bis-[tributylzinn]oxid.

### Beispiel 2

Zu einer Lösung aus 8,5 g (0,22 mol) NaBH₄ in 200 ml Methanol, die mit 8,0 g (0,2 mol) Natriumhydroxid stabilisiert ist, werden innerhalb von 1 h bei Rückflußtemperatur 119,2 g (0,2 mol) Bis-[tributylzinn]oxid, gelöst in 100 ml THF, zudosiert.

Nach 1 h Nachreaktion bei Rückflußtemperatur werden die Lösungsmittel abdestilliert und das Produkt durch Filtration von ausgefallenem Feststoff abgetrennt. Hexabutyldistannan wird mit einer Ausbeute von 109 g (94 %) isoliert.

### Beispiel 3

Die Umsetzung von Bis[tributylzinn]oxid unter den im Beispiel 1 beschriebenen Bedingungen liefert in Gegenwart von 2,5 Gew.-% Thioglycolsäure ohne Nachreaktion das Distannan in 97 %iger Ausbeute.

### Beispiel 4

Zu einer Lösung aus 119,2 g Bis-[tributylzinn]oxid in 100 ml THF werden bei Rückflußtemperatur innerhalb von 1 h 8,5 g (0,2mol) NaBH₄, gelöst in 200 ml Ethanol und stabilisiert mit 8,0 g Natriumhydroxid, zudosiert.

Nach 1 h Nachreaktion bei Rückflußtemperatur werden die Lösungsmittel abdestilliert und das Produkt durch Filtration von ausgefallenem Feststoff abgetrennt. Hexabutyldistannan wird mit einer Ausbeute von 104 g (90 %) isoliert.

### Beispiel 5

Zu einer Lösung aus 186,5 g (0,2 mol) Bis-[trioctylzinn]oxid] in 150 ml THF werden bei Rückflußtemperatur innerhalb von 1 h 8,5 g (0,22 mol) NaBH₄ gelöst in 200 ml Methanol und stabilisiert mit 8,0 g Natriumhydroxid, zudosiert. Nach in Beispiel 1 beschriebener Aufarbeitung werden 176 g (96 %) Hexaoctyldistannan isoliert.

## Patentansprüche

1. Verfahren zur Herstellung von Hexaalkyldistannanen der allgemeinen Formel
R₁R₂R₃Sn-SnR₁R₂R₃
wobei R₁, R₂, R₃ verzweigte und/oder unverzweigte und/oder substituierte Alkylgruppen sind, die gleich oder unterschiedlich sein können, dadurch gekennzeichnet, daß man Bis-[trialkylzinn]oxid ]oxid mit einer durch Zusatz einer Base stabilisierten alkoholischen, insbesondere methanolischen, NaBH₄-Lösung in Gegenwart eines inerten Lösungsmittels umsetzt.

2. Verfahren gemäß Anspruch 1, dadurch gekennzeichnet, daß man eine Nachreaktionszeit von 0,5 - 3 h einhält.

3. Verfahren gemäß den Ansprüchen 1 und 2, dadurch gekennzeichnet, daß als inertes Lösungsmittel ein Lösungsmittel eingesetzt wird, das weder mit Hexaalkyldistannanen, den intermediär erzeugten Trialkylzinnhydriden noch mit NaBH₄ reagiert.

4. Verfahren gemäß den Ansprüchen 1 bis 3, dadurch gekennzeichnet, daß als Lösungsmittel THF eingesetzt wird.

5. Verfahren gemäß den Ansprüchen 1 bis 4, dadurch gekennzeichnet, daß das molare Verhältnis zwischen Bis-[trialkylzinn]oxid und NaBH₄ ca. 1 : 1 beträgt.

6. Verfahren gemäß den Ansprüchen 1 bis 5, dadurch gekennzeichnet, daß zur Stabilisierung der alkoholischen NaBH₄-Lösung als Base Natriumhydroxid, eingesetzt wird.

7. Verfahren gemäß den Ansprüchen 1 bis 6, dadurch gekennzeichnet, daß die Reaktion durch Zusatz von 0,1 - 10 Gew.-% Wasserstoff-aciden Verbindungen beschleunigt wird.

## Claims

1. Process for preparing hexaalkyldistannanes of the general formula
R₁R₂R₃Sn-SnR₁R₂R₃
where R₁, R₂, R₃ are branched and/or unbranched and/or substituted alkyl groups which may be identical or different, characterized in that bis[trialkyltin] oxide is reacted in the presence of an inert solvent with an alcoholic, in particular methanolic, NaBH₄ solution stabilized by addition of a base.

2. Process according to Claim 1, characterized in that an after-reaction time of 0.5 - 3 h is employed.

3. Process according to Claim 1 or 2, characterized in that the inert solvent used is a solvent which reacts neither with hexaalkyldistannanes, the trialkyltin hydrides generated as intermediates nor with NaBH₄.

4. Process according to any of Claims 1 to 3, characterized in that the solvent used is THF.

5. Process according to any of Claims 1 to 4, characterized in that the molar ratio of bis[trialkyltin] oxide to NaBH₄ is about 1 : 1.

6. Process according to any of Claims 1 to 5, characterized in that the base used for stabilizing the alcoholic NaBH₄ solution is sodium hydroxide.

7. Process according to any of Claims 1 to 6, characterized in that the reaction is accelerated by addition of 0.1 - 10% by weight of hydrogen-acid compounds.

## Revendications

1. Procédé de préparation d'hexaalcoyldistannanes de formule générale :
R₁R₂R₃Sn-SnR₁R₂R₃
dans laquelle R₁, R₂, R₃ sont des radicaux alcoyle ramifiés et/ou non ramifiés et/ou substitués, qui peuvent être identiques ou différents, caractérisé en ce que l'on fait réagir de l'oxyde de bis(trialcoylétain) avec une solution alcoolique, en particulier méthanolique, de NaBH₄ stabilisée par l'addition d'une base, en présence d'un solvant inerte.

2. Procédé suivant la revendication 1, caractérisé en ce que l'on respecte un temps de réaction subséquent de 0,5 à 3 h.

3. Procédé suivant les revendications 1 et 2, caractérisé en ce que le solvant inerte utilisé est un solvant qui ne réagit ni avec les hexaalcoyldistannanes, ni avec les hydrures de trialcoylétain intermédiaires obtenus, ni avec NaBH₄.

4. Procédé suivant les revendications 1 à 3, caractérisé en ce que le solvant utilisé est le THF.

5. Procédé suivant les revendications 1 à 4, caractérisé en ce que le rapport molaire entre l'oxyde de bis(trialcoylétain) et le NaBH4 vaut environ 1:1.

6. Procédé suivant les revendications 1 à 5, caractérisé en ce que l'on utilise de l'hydroxyde de sodium comme base pour la stabilisation de la solution alcoolique de NaBH₄.

7. Procédé suivant les revendications 1 à 6, caractérisé en ce que la réaction est accélérée par l'addition de 0,1 à 10% en poids de composés hydrogénoacides.
